Europäisches Patentamt

European Patent Office

Office européen des brevets

(19)

(11) Veröffentlichungsnummer : **0 170 086**
**B1**

# (12) EUROPÄISCHE PATENTSCHRIFT

(45) Veröffentlichungstag der Patentschrift :
11.10.89

(21) Anmeldenummer : 85108227.1

(22) Anmeldetag : 03.07.85

(51) Int. Cl.⁴ : **B 60 R 13/02**

(54) **Vorrichtung zum Einbau eines Dachhimmels, nebst anderer von innen am Dach zu befestigender Teile, in einer Karosserie von Kraftfahrzeugen, insbesondere Personenkraftwagen.**

(30) Priorität : 28.07.84 DE 3428008

(43) Veröffentlichungstag der Anmeldung :
05.02.86 Patentblatt 86/06

(45) Bekanntmachung des Hinweises auf die Patenterteilung : 11.10.89 Patentblatt 89/41

(84) Benannte Vertragsstaaten :
DE FR GB IT SE

(56) Entgegenhaltungen :
DE–A– 3 241 615
DE–A– 3 249 454
FR–A– 2 445 247

(73) Patentinhaber : Adam Opel Aktiengesellschaft
Bahnhofsplatz 1 Postfach 1560
D-6090 Rüsselsheim (DE)

(72) Erfinder : Müller, Helmut
Wiesenstrasse 62
D-6090 Rüsselsheim (DE)

(74) Vertreter : Rosenfeld, Jürgen, Dipl. Ing. et al
Adam Opel Ag Patentabteilung Bahnhofsplatz 1 Postfach 17 10
D-6090 Rüsselsheim (DE)

## Beschreibung

Die Erfindung bezieht sich auf eine Vorrichtung nach dem Oberbegriff des Patentanspruchs 1.

Nach dem bisherigen Stand der Technik ist es häufig noch gang und gäbe, den Dachhimmel und andere von innen am Dach zu befestigende Teile, wie z. B. Sonnenblenden, Haltegriffe und dergleichen mehr, in zeitaufwendiger, schwieriger und anstrengender Überkopfarbeit manuell in Kraftfahrzeug-Karosserien einzubauen.

Eine dem eingangs genannten Gattungsbegriff entsprechende Vorrichtung, die gegenüber dem im vorstehenden skizzierten Stand der Technik schon einen gewissen Fortschritt darstellt, sowie ein zugehöriges Montageverfahren sind durch die DE-A-3 241 615 bekannt geworden. Allerdings befaßt sich die vorgenannte Druckschrift lediglich mit dem Einbau des Dachhimmels als solchen, wobei der Einbau überdies noch in sehr komplizierter und aufwendiger Weise erfolgt. Dagegen werden nicht die zahlreichen weiteren zu montierenden Einzelteile berücksichtigt. Diese weiteren Einzelteile, wie Sonnenblende, Haltegriffe und dergleichen, müssen bei dem bekannten Verfahren und der zur Durchführung desselben dienenden bekannten Vorrichtung nach Montage des Dachhimmels durch Einzelmontage installiert werden. Dies macht deutlich, daß die bekannte Vorrichtung und das entsprechende bekannte Verfahren nicht geeignet sind, der oben geschilderten Problematik in befriedigender Weise Rechnung zu tragen.

Aufgabe der Erfindung ist es daher, Maßnahmen dafür zu treffen, daß nicht nur der Dachhimmel, sondern auch weitere im Bereich des Dachhimmels einzubauende Teile einfacher, schneller und unter geringerem Kostenaufwand montiert werden können.

Gemäß der Erfindung wird die Aufgabe durch die im kennzeichnenden Teil des Patentanspruchs 1 angegebenen Merkmale gelöst.

Die Erfindung gestattet vorteilhafterweise eine weitgehende Automatisierung der Montage des Dachhimmels, nebst der in diesem Bereich liegenden Einzelteile innerhalb der Kraftfahrzeugkarosserie. Zum Beispiel kann die Vormontage der Teile am Montagegestell in folgender Reihenfolge vorgenommen werden :

1. Einlegen der Haltegriffe
2. Einlegen von Blindstopfen anstelle eines Haltegriffes
3. Einlegen der Sonnenblenden
4. Einlegen der Sonnenblendenböckchen
5. Positionierung der Abschlußleiste hinten
6. Einlegen des Fertighimmels.

Die Vormontage der Teile am Montagegestell kann von Hand oder automatisch erfolgen.

Zweckmäßigerweise besitzt das Montagegestell Betätigungsvorrichtungen für die Endmontage der Teile, insbesondere Zylinder-Kolben-Einheiten für alle zu klipsenden Teile (Klipselemente) und Schrauber für alle zu verschraubenden Teile (Schraubelemente).

Weitere Ausgestaltungen und Vorteile der Erfindung können den Patentansprüchen 4 und 5 sowie — anhand von Ausführungsbeispielen — der Zeichnung und der nachstehenden Zeichnungsbeschreibung entnommen werden. Es zeigt :

Fig. 1 in perspektivischer Darstellung — ein Montagegestell während der Vormontage des Dachhimmels, nebst benachbarter Teile,

Fig. 2 die vormontierte Montageeinheit während des Einfahrvorganges in eine Pkw-Karosserie, ebenfalls in perspektivischer Darstellung,

Fig. 3 die Endstellung der vormontierten Montageeinheit unterhalb des Karosseriedaches, in Darstellung entsprechend Fig. 2,

Fig. 4 einen Teilausschnitt des in Fig. 1 in seiner Gesamtheit dargestellten Montagegestells, in gegenüber Fig. 1 vergrößerter Darstellung,

Fig. 5 einen weiteren Teilausschnitt aus dem Montagegestell nach Fig. 1, ebenfalls gegenüber der Darstellung nach Fig. 1 vergrößert, und

Fig. 6 einen sogenannten Blinddeckel, entsprechend der Einzelheit « A » nach Fig. 4, in gegenüber Fig. 4 leicht vergrößerter Darstellung.

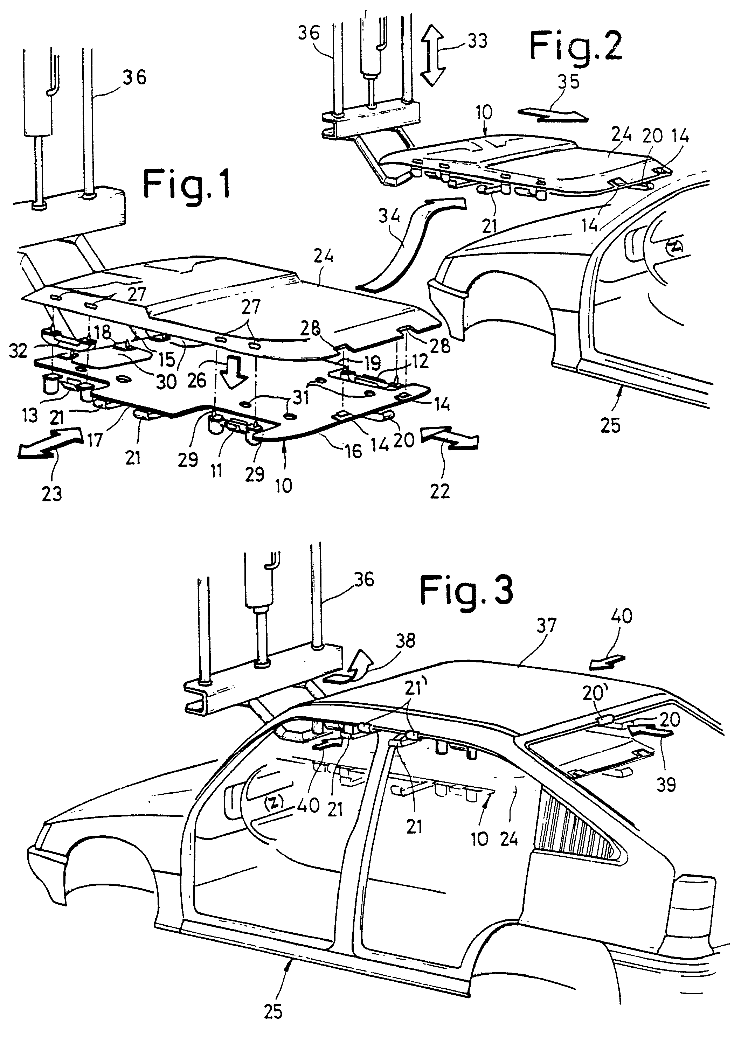

Nach Fig. 1-3 bezeichnet 10 ein im wesentlichen als Blechplatte ausgebildetes Montagegestell, welches verschiedene Halte- und Betätigungsvorrichtungen 11-15 besitzt. An der Unterseite des im wesentlichen Rechteckform aufweisenden Montagegestells 10 sind ferner — an allen vier Seitenkanten 16-19 — hakenförmige Halteelemente 20, 21 angebracht. Die Halteelemente 20, 21 sind durch Betätigungsvorrichtungen (nicht gezeigt) in Pfeilrichtung 22 bzw. 23 beweglich angeordnet.

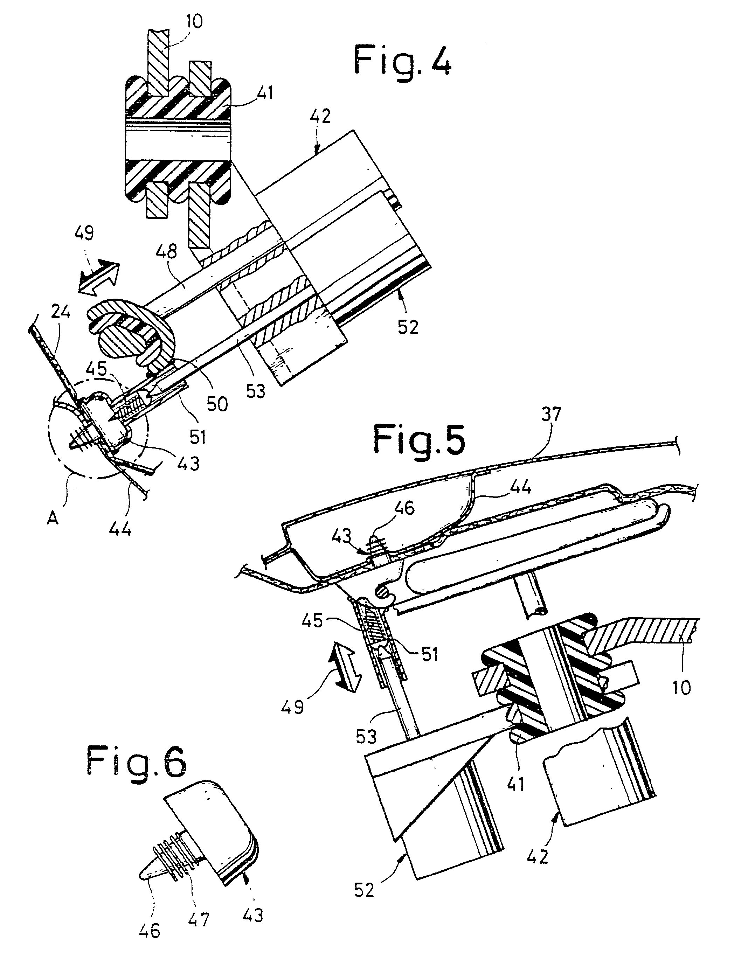

Aus Fig. 1 ist ferner ersichtlich ein vorgefertigter Dachhimmel 24 für eine Pkw-Karosserie 25 (siehe Fig. 2 u. 3), welcher gerade in Vertikalrichtung von oben nach unten (Pfeilrichtung 26) auf dem Montagegestell 10 montiert wird. An dem Fertighimmel 24 sind verschiedene Ausnehmungen 27 und Aussparungen 28 vorgesehen, die in Vormontageposition des Dachhimmels 24 (siehe hierzu Fig. 2) mit Zentrierstiften 29 bzw. den bereits erwähnten Halteteilen 14 am Montagegestell 10 zusammenwirken. Der Dachhimmel 24 wird hierdurch am Montagegestell 10 fixiert. Außerdem sind an dem Montagegestell 10, wie Fig. 1 desweiteren erkennen läßt, Vertiefungen 30 zum Einlegen von Sonnenblenden (nicht gezeigt) sowie Ausnehmungen 31 zur Vormontage von Blindstopfen (vgl. hierzu Fig. 4 und 6) vorgesehen. Seitliche und obere Haltegriffe, z. B. 32, können an den Stellen 11, 12 und 13 vormontiert werden.

Die Vormontage der erwähnten Teile erfolgt zweckmäßigerweise im Stand neben dem Endmontageband, (nicht gezeigt) entweder von Hand (Fig. 1) oder mit Automaten. Hierbei sollten zunächst die Haltegriffe, z. B. 32, eingelegt werden. Anschließend kann das Einlegen der Blindstopfen (vgl. Fig. 4 und 6) erfolgen. Danach sollten die Sonnenblenden und Sonnenblendenböckchen (nicht gezeigt) an den dafür vorgesehenen Stellen (30) vormontiert werden. Nach Vormontage der Abschlußleiste hinten (nicht gezeigt) kann der Fertigdachhimmel 24 eingelegt werden. Nun kann die vormontierte Montageeinheit — wie Fig. 2 und 3 zeigen — mittels einer in Vertikal- und Horizontalrichtung (vgl. Pfeile 33, 34 und 35 in Fig. 2) verfahrbaren Bewegungseinrichtung 36, die z. B. druckmittelgesteuert bzw. -betätigt sein kann, durch die Frontscheibenöffnung der Karosserie 25 in das Innere der Karosserie 25 eingefahren (vgl. Fig. 3).

Nach der Positionierung der Montageeinheit in der in Fig. 3 in dünnen Linien angedeuteten Position im vertikalen Abstand unterhalb des Fahrzeugdaches 37 wird schließlich die Montageeinheit — ebenfalls mittels der Bewegungseinrichtung 36 — in Pfeilrichtung 38 vertikal angehoben bis der Fertig-Dachhimmel 24 an der Innenseite des Fahrzeugdaches 37 zur Anlage kommt. Nun ist die Endmontageposition des Fertig-Dachhimmels 24 bzw. der gesamten Montageeinheit erreicht. Die durch die Fenster- bzw. Türöffnungen der Karosserie 25 nach außen ragenden hakenförmigen Halteelemente 20, 21 werden nun in Pfeilrichtung 39 bzw. 40 nach innen bewegt bis ihre hakenförmig nach oben abgebogenen Enden mit den betreffenden Seitenkanten des Dachrahmens in Eingriff kommen (vgl. Pos. 20' bzw. 21' in Fig. 3). Die Montageeinheit ist nun mit der Fahrzeugkarosserie verkrallt und die Bewegungseinrichtung 36 kann von der Montageeinheit gelöst und von der Karosserie 25 wegbewegt werden.

Es folgt nunmehr die Endmontage der einzelnen auf der Montageeinheit vormontierten Bauteile. Es wird diesbezüglich insbesondere auf Fig. 4, 5 und 6 verwiesen. Fig. 4 läßt erkennen, daß an dem Montagegestell 10 — über ein elastisches Zwischenglied 41 eine Kolben-Zylinder-Einheit 42 angebracht ist, die als Betätigungsvorrichtung für zu klipsende Teile (sogenannte Klipselemente) vorgesehen ist. Ein derartiges Klipselement ist in Fig. 4 und 6 mit 43 bezeichnet. Es handelt sich hierbei um einen sogenannten Blindstopfen oder -deckel, der einerseits zur Verbindung des Dachhimmels 24 mit dem Dachrahmen 44 dient und andererseits die Aufgabe hat, Schrauben 45 aufzunehmen und gleichzeitig zur Zentrierung für die anzubringende Schraubverbindung zu dienen (vgl. Fig. 4).

Wie im einzelnen Fig. 6 erkennen läßt, besitzt der Blindstopfen 43 einen konischen Sucherstift 46, der zum erleichterten Auffinden der Montageposition (Fig. 4) dient. Am mittleren Teil des Sucherstiftes 46 sind mehrere Rastlamellen 47 angebracht, mit deren Hilfe der Blindstopfen 43 in der aus Fig. 4 ersichtlichen Montageposition gehalten wird. Das Eindrücken des Blindstopfens 43 in die Montageposition geschieht mittels der bereits erwähnten Kolben-Zylinder-Einheit 42, deren Kolben 48, wie aus Fig. 4 hervorgeht, in Pfeilrichtung 49 hin- und herbewegbar ist. Mit dem Kolben 48 ist — bei 50 — eine Zentrierhülse 51 verbunden, die nach Vormontage des Blindstopfens 42 auf diesen aufgestülpt wird (Fig. 4). Anschließend können nun die Schraubelemente eingeschraubt werden. Zu diesem Zweck ist — wie insbesondere aus Fig. 5 ersichtlich ist — zusammen mit der zum Eindrücken der Klips-Elemente dienenden Kolben-Zylinder-Einheit 42 ein sogenannter Schrauber an dem Montagegestell 10 befestigt, der mit 52 beziffert ist. Es handelt sich hierbei um einen sogenannten Winkelschrauber. Dieser weist einen drehbaren Stift 53 auf, dessen freies Ende innerhalb der bereits erwähnten Zentrierhülse 51 mit der dort befindlichen Blechschraube 45 zusammenwirkt. Die Schraube 45 wird in den Blindstopfen 43 eingeschraubt.

Nachdem sämtliche auf dem Montagegestell 10 vormontierten Teile in der beschriebenen Weise am Fahrzeugdach endmontiert sind, können die Halteelemente 20, 21 des Montagegestells 10 entriegelt werden, so daß sich die Verkrallung des Montagegestells 10 löst. Das Montagegestell 10 kann anschließend mittels der Bewegungseinrichtung 36 abgesenkt und schließlich aus der Karosserie 25 herausgefahren werden. Nach Wiedererreichen der Anfangsposition (vgl. Fig. 1) kann erneut eine Beladung des Montagegestells 10 mit vorzumontierenden Teilen, wie oben beschrieben, erfolgen. Vorher sollte noch eine Überprüfung der ordnungsgemäßen Endmontagepositionen der an der Karosserie 25 montierten Teile vorgenommen werden. Hierzu können in an sich bekannter Weise Meldeschalter dienen.

## Patentansprüche

1. Vorrichtung zum Einbau eines Dachhimmels (24), nebst anderer von innen am Dach (37) zu befestigender Teile (32, 43, 45), wie Sonnenblenden, Haltegriffe und dergleichen mehr, in einer Karosserie (25) von Kraftfahrzeugen, insbesondere Personenkraftwagen, wobei ein Montagegestell (10) mit Aufnahme- und Lösevorrichtungen für den in die Karosserie (25) einzubauenden Dachhimmel (24) derart vormontiert ist, daß der Dachhimmel (24) seiner späteren Endmontageposition auf dem Montagegestell (10) entspricht, dadurch gekennzeichnet, daß außer dem Dachhimmel (24) auch die anderen innen am Dach (37) zu befestigenden Teile (z. B. 32, 43, 45) entsprechend ihrer späteren Endmontageposition auf dem Montagegestell (10) vormontierbar sind und daß das Montagegestell (10) mindestens an zwei gegenüberliegenden Seitenkanten (16, 18 bzw. 17, 19), vorzugsweise an allen Seitenkanten, hakenartige bewegliche Halteelemente (20, 21) besitzt, die zugleich als Zentriervorrichtung für die Montageeinheit am Dach (37) im Inneren der Karosserie (25) dienen.

2. Vorrichtung nach Anspruch 1, dadurch gekennzeichnet, daß das Montagegestell (10) Betätigungsvorrichtungen (42, 52) für die Endmontage der Teile aufweist.

3. Vorrichtung nach Anspruch 2, dadurch gekennzeichnet, daß das Montagegestell (10) Zylinder-Kolben-Einheiten (42) für alle zu klipsenden Teile (Klipselemente, z. B. 43) und Schrauber (52) für alle zu verschraubenden Teile (Schraubelemente, z. B. 45) besitzt.

4. Vorrichtung nach Anspruch 1, 2 oder 3, dadurch gekennzeichnet, daß die Klips-Elemente (43) mit Sucherstiften (46) zur Überbrückung von Dachtoleranzen versehen sind und die Sucherstifte zugleich zur Zentrierung der Klipselemente dienen.

5. Vorrichtung nach einem oder mehreren der Ansprüche 1-4, dadurch gekennzeichnet, daß das Montagegestell (10) an einer — vorzugsweise druckmittelgesteuerten bzw. -betätigten — in Vertikal- und Horizontalrichtung verfahrbaren Bewegungseinrichtung (36) angeordnet ist.

## Claims

1. Apparatus for fitting a roof lining (24) together with other parts (32, 43, 45) to be fixed to the roof (37) from the inside such as sun visors, grab handles and the like, in a body (25) of a motor vehicle, in particular passenger cars, wherein an assembly frame (10) with holding and release means for the roof lining (24) to be fitted in the body (25) is pre-assembled in such a way that the roof lining (24) corresponds to its later final assembly position on the assembly frame (10), characterised in that in addition to the roof lining (24), the other parts (e. g. 32, 43, 45) to be fixed to the roof (37) from the inside can be pre-assembled on the assembly frame (10) according to their later final assembly position, and the assembly frame (10) at at least two opposed side edges (16, 18 or 17, 19), preferably at all side edges, has hook-like movable holding elements (20, 21) which also serve as centring means for the assembly unit on the roof (37) inside the body (25).

2. Apparatus according to claim 1, characterised in that the assembly frame (10) has operating means (42, 52) for final assembly of the parts.

3. Apparatus according to claim 2, characterised in that the assembly frame (10) has piston and cylinder units (42) for all parts to be clipped on (clip-on elements, e. g. 43) and screw-drivers or spanners (52) for all parts to be screwed on (screw-on elements, e. g. 45).

4. Apparatus according to claim 1, 2 or 3, characterised in that the clip-on elements (43) are provided with locating pins (46) for bridging roof tolerances, and the locating pins also serve to centre the clip-on elements.

5. Apparatus according to one or more of claims 1-4, characterised in that the assembly frame (10) is mounted on a working mechanism (36) which is preferably pressure medium controlled or operated and movable in vertical and horizontal directions.

## Revendications

1. Dispositif de montage d'un habillage de plafond de toit (24) à côté d'autres parties (32, 43, 45) à fixer de l'intérieur sur le toit (37), comme des pare-soleil, des poignées de maintien et similaires, dans une carrosserie (25) de véhicules automobiles, en particulier de voitures particulières, un bâti de montage (10) avec des dispositifs de réception et de démontage pour l'habillage de plafond de toit (24) à monter dans la carrosserie (25) étant monté au préalable de sorte que l'habillage de plafond de toit (24) corresponde à sa position de fin de montage ultérieure sur le bâti de montage, caractérisé en ce qu'à l'exception de l'habillage de plafond de toit (24), les autres parties (par exemple 32, 43, 45) à fixer à l'intérieur sur le toit (37) sont aussi susceptibles d'être montées au préalable en fonction de leur position de fin de montage ultérieure sur le montage (10) et en ce que le bâti de montage (10) possède, au moins sur deux arêtes latérales se faisant face (16, 18 ou 17, 19), de préférence sur toutes les arêtes latérales, des éléments de maintien mobiles (20, 21) en forme de crochet servant en même temps de dispositif de centrage pour l'unité de montage sur le toit (37), à l'intérieur de la carrosserie (25).

2. Dispositif selon la revendication 1, caractérisé en ce que le bâti de montage (10) présente des dispositifs d'actionnement (42, 52) pour le montage final des parties.

3. Dispositif selon la revendication 2, caractérisé en ce que le bâti de montage (10) possède des unités à cylindre et piston (42) pour toutes les parties à encliqueter (éléments d'encliquetage, par exemple 43) et des visseurs (52) pour toutes les parties à visser (éléments à vis, par exemple 45).

4. Dispositif selon la revendication 1, 2 ou 3, caractérisé en ce que les éléments d'encliquetage (43) sont pourvus de cônes d'introduction (46) pour tenir compte des tolérances du toit et les cônes d'introduction servent en même temps au centrage des éléments d'encliquetage.

5. Dispositif selon une ou plusieurs des revendications 1 à 4, caractérisé en ce que le bâti de montage (10) est disposé sur un dispositif de déplacement (36), de préférence commandé ou actionné par un milieu sous pression, déplaçable en directions verticale ou horizontale.

Fig.1

Fig.2

Fig.3

Fig. 4

Fig.5

Fig.6